# EUROPEAN PATENT SPECIFICATION

(11) **EP 3 483 204 B1**
(45) Date of publication and mention of the grant of the patent: **15.09.2021**
(21) Application number: 18464003.5
(22) Date of filing: 26.09.2018
(51) Int. Cl.: C08J 3/22

(54) **MASTERBATCH FOR IMPROVING THE SCRATCH RESISTANCE OF POLYMETHYLMETHACRYLATE AND THE PROCESS FOR PRODUCING THE SAME**
MASTERBATCH ZUR VERBESSERUNG DER KRATZFESTIGKEIT VON POLYMETHYLMETHACRYLAT UND VERFAHREN ZUR HERSTELLUNG DAVON
MÉLANGE MAÎTRE DESTINÉ À AMÉLIORER LA RÉSISTANCE AUX ÉRAFLURES DU POLYMÉTHACRYLATE DE MÉTHYLE ET SON PROCÉDÉ DE FABRICATION

(30) Priority: 23.10.2017 RO 201700859
(43) Date of publication of application: 15.05.2019
(73) Proprietor: Institutul National de Cercetare-Dezvoltare pentru Chimie si Petrochimie - ICECHIM, 060021 Bucuresti (RO)
(72) Inventor: Vuluga, Zina, Bucuresti (RO); Elizetxea, Cristina, 20009 Donostia San Sebastian (ES); Ordonez, Mario, 48320 Ajangiz (ES); Corobea, Mihai Cosmin, Bucuresti (RO); Iorga, Michaela Doina, Bucuresti (RO); Florea, Dorel, Bucuresti (RO)

(56) References cited:
- WO-A1-2015/198197
- US-A- 5 179 142
- US-A1- 2006 009 555
- US-B2- 8 962 728
- DATABASE WPI Week 201756 Thomson Scientific, London, GB; AN 2017-552575 XP002789633, -& JP 2017 137474 A (ASAHI KASEI CORP) 10 August 2017 (2017-08-10)

## Description

The invention relates to the composition of a masterbatch based on polymethylmethacrylate (PMMA), with polyester modified polysiloxane and a reinforcing filler, to a process for producing it and to a process for using said masterbatch to achieve a PMMA composite with highly improved wear (or abrasion) resistance, excellent anti-scratch properties, usable in the production of injection moulded parts for the automotive industry.

Due to its outstanding transparency, dimensional stability, mechanical strength, weather resistance, recyclability and the relatively low-cost price, PMMA finds its applicability in many areas of industry. However, for use in the automotive industry, PMMA must exhibit outstanding aesthetic properties and scratch resistance is one of the most demanding requirements for both interior and exterior parts. Although, compared to other thermoplastic materials, PMMA has the highest scratch resistance, however, there are car components that need special protection against various types of wear.

In order to improve UV and scratch resistances, various technologies have been developed to modify the surfaces of plastic parts, either with paints, or with thin films of polyvinylchloride (PVC), thermoplastic polyolefins (TPO) or transparent thermoplastic polymers such as polycarbonate (PC), polystyrene (PS) and PMMA. Acrylic resins, melamine, silicone resins, acrylic and methacrylic polymers are preferred for the coating of polyesters. Coating technologies involve working with solvents, reagents, different temperature and time conditions, plasma or radiation work, and high costs.

U.S. Patent No. 20140018474 A1 discloses a method of making a composition based on inorganic particles (selected from particles of metal oxides, ceramic particles and combinations of them), a dispersing agent which may be inorganic (selected from aluminium oxide, silicon dioxide, zinc oxide, zirconium dioxide, cerium dioxide, titanium dioxide and combinations thereof) or polymeric (selected from polyacrylate, polyester, polyamide, polyurethane, polyimide, polyurea, polyether, polysiloxane, fatty acid ester and combinations thereof) and organic binding agent (selected from polyether, polyurethane, acrylate, unsaturated polyester, epoxy compound, polyamide, melamine, polyolefin, polystyrene, polysiloxane, fluorinated polymer, and combinations thereof). The composition is applied to a polymeric substrate (selected from acrylonitrile butadiene styrene-ABS, PC, PS, PMMA copolymer or combinations thereof) as a film. The process involves spray deposition, UV or heat curing procedure, or combinations of them. The composition exhibits improved scratch and wear properties and can be applied to paints or composites.

From a cost perspective, recent research has focused on finding new and specially developed additives. These additives should be easier to use by direct blending into the polymer mass, to improve the scratch resistance of plastics for the automotive industry, thus eliminating the need to cover or paint the surface of the parts. The most used categories of additives in the automotive industry to improve the scratch resistance of plastics are: organically modified polysiloxanes, surface-migrating additives and special mineral fillers. The effectiveness of these additives depends on particle size, quantity, basic polymer matrix and processing technology. For maximum efficiency, more than one additive of the same category or mixtures of different categories is used.

Often, obtaining the desired properties means a series of compromises. For example, to obtain improved scratch resistance, it is necessary to increase the tensile strength and rigidity of the polymeric composite which unfortunately affects hardness and impact resistance or the loss of optical and rheological properties and vice versa.

Patent CN104962022 describes a method of extruding a PMMA-based composition with high heat resistance, high light transmittance and improved scratch resistance. These properties are achieved by the addition of a terpolymer (N-phenylmaleimide-styrene-methyl methacrylate) with high transparency and high compatibility with PMMA. The disadvantage of the method is that for proper behaviour during the extrusion process and maintaining the other properties, especially impact resistance, it is necessary to add one or more processing additives (impact modifier, flow modifier, antioxidant, lubricant, temperature and light stabilizers, colorants, release agents, antistatic agents).

Patent CN105255084 relates to a PMMA-based composition, a butyl methyl methacrylate copolymer, a lubricating agent (selected from silicone oil, white mineral oil, fatty acid amide, barium stearate, magnesium stearate, zinc, pentaerythritol monostearate, polyethylene wax or paraffin wax), antioxidants and light stabilizers, characterized by high impact resistance and flexibility, high colouring power and excellent surface appearance (black, piano black parts). The composition is obtained by means of a twin screw extruder and can be applied to the production of exterior auto parts, construction materials, exterior decorations or other areas. The patent specification does not mention what happens to the other properties of PMMA (tensile strength, stiffness, tribological properties).

U.S. Patent No. 8,962,728 B2 relates to a composition based on PMMA and organically modified polysiloxane or polysiloxane (block copolymer) containing siloxane blocks and polyester blocks. The composition is obtained by extrusion and 200 x 100 x 3 mm plates are then injected to determine the properties. The resulting plates have improved gloss, cleaning resistance and scratch resistance compared to polysiloxane-free PMMA. By the addition of polysiloxane, the melt flow index increases but thermal stability decreases. There is no mention of what happens to the mechanical strength of the material (modulus of elasticity, tensile strength and impact resistance).

The advantage of our invention is that, in the masterbatch composition, the components are selected in a certain manner, mixed in a ratio and under such conditions that by blending with PMMA produces an improvement in the scratch resistance of PMMA, while maintaining as much as possible the other properties (optical, thermal and mechanical). The masterbatch is specifically designed for PMMA and can be diluted with the polymer to the concentration required to improve the desired property either at an intermediate extrusion stage followed by injection moulding or directly during the injection process of the finished product.

The technical problems solved by the invention consist in the preparation of a PMMA-based masterbatch, polyester modified polysiloxane (block copolymer) and a reinforcement nanofiller (natural nanoparticles with tubular morphology or nanosilica) and a process for obtaining the granular masterbatch in which the nanofiller is uniformly dispersed, on the one hand due to strong interaction with the polyester modified polysiloxane and, on the other hand due to the compatibility between polysiloxane and PMMA. For interface adhesion, surface-treated nanofillers with quaternary ammonium salts, fatty acid amides, silazanes, modified silanes or polysiloxanes are used. The ratio of the components, the order of mixing and the compounding conditions are set so that the masterbatch is dispersed easily and uniformly in the polymer matrix and the final composite, obtained by diluting the PMMA masterbatch to a 2% nanofiller content, has a scratch resistance improved with 50 up to 230%, a gloss similar or higher with 15-20% and a thermal stability similar to PMMA, without lowering the modulus of elasticity, tensile strength and impact resistance by more than 10-15% compared to PMMA.

According to the invention, the composition for obtaining the masterbatch based on PMMA, polyester modified polysiloxane and reinforcement nanofiller eliminates all the drawbacks described above and contains the following components, expressed as a percentage by weight: a) from 60% to 80% PMMA (characterized by a good flow behaviour, high mechanical strength, abrasion resistance, surface hardness, weather resistance, high brightness and high gloss specific to class A); b) from 20% to 40% mixture, either in a 1:1 ratio of polyester modified polysiloxane and a hydrophobic nanosilica (surface treated with silazane or a modified silane) or in a 2:1 ratio of polyester-modified polysiloxane and a silicate nanotube, organophilized with a quaternary ammonium salt or surface-treated with a fatty acid amide, and c) 0.3%, with respect to PMMA, a sterically hindered phenolic antioxidant.

The process for obtaining the masterbatch and its use for improving the scratch resistance of the PMMA-based composites consists in that: in a gravimetric rotating mixer, PMMA is mixed with the phenolic antioxidant, the polysiloxane and the reinforcing nanofiller, chosen from silicate nanotubes or nanosilica. Prior to use, PMMA and the reinforcement nanofiller (nanosilica and silicate nanotubes) were dried for 4 hours at 80 °C and 2 hours at 70 °C under vacuum. The silicate nanotubes can be pre-treated with polysiloxane or with fatty acid amides in dynamic conditions at 80 °C for 30-60 minutes. In the rotating mixer, the components are mixed at room temperature for 15-30 minutes, the order of their introduction being made in two ways: 1. PMMA is first mixed with the phenolic antioxidant at room temperature for 5-10 minutes, then the polyester modified polysiloxane is introduced and continue mixing for another 5-10 minutes, after which the surface-treated nanosilica or the organophilized silicate nanotube is introduced and continue mixing for another 5-10 min. 2. PMMA is first mixed with the phenolic antioxidant at room temperature for 5-10 min, then the mixture obtained previously by mixing 5-10 min of the polyester modified polysiloxane with the surface treated nanosilica or the organophilized silicate nanotube is introduced and mixing is continued for another 5-10 minutes. The resulting final mixture is homogenized in melt in a co-rotating twin-screw extruder, at a main screw speed of 130-200 rpm and an extrusion die temperature of 200-220 °C. The extruded filaments were taken over a conveyor belt, cooled by air and then granulated with a flow-mounted granulator with the extruder. The masterbatch, in the form of granules, is dried for 4 hours at 80 °C, then mixed in a proportion of 10% to 20% in a gravimetric rotating mixer with PMMA and then homogenized in the melt, either in an intermediary step, in a co-rotating twin screw extruder, at a main screw speed of 130 rpm and an extrusion die temperature of 220 °C, followed by the injection moulding, or directly during injection moulding, at injection temperature of 220-240 °C and mould temperature of 70-90 °C.

Application of the invention leads to the following advantages:
- obtaining a special masterbatch, in granular form, which is easily and uniformly dispersed in a PMMA matrix;
- working in cleaner and safer conditions;
- obtaining a masterbatch with high level of reinforcement nanoaditives (> 10%) and improved flowability, which will be reflected in the production of high productivity parts by injection moulding;
- mixing the masterbatch with PMMA allows the production of composites with 50-230% improved scratch resistance, similar gloss or 15-20% higher than PMMA and with same thermal stability, without compromising the modulus of elasticity, tensile strength and impact resistance by more than 10-15% (compared to neat PMMA);
- blending of the masterbatch with PMMA allows the production of improved polymeric composites that are used in the automotive industry as well as in other fields to obtain lighter injection moulded parts with a good optical surface appearance and high mechanical strength;
- obtaining injected parts with improved aesthetic and mechanical properties by mixing the masterbatch with PMMA directly during injection process for the final product;
- low consumption of raw materials and energy through the possibility of reducing the number of stages of homogenization process in the melt;
- the process according to the invention is simple and is applied on typical plastic compounding machines, like those provided by the manufacturers.

The polymeric matrix, PMMA, used to obtain and dilute the masterbatch according to the invention is an amorphous thermoplastic material, recommended for injection moulding, with a melt flow index, MFI = 4.0 g/10 min (230 °C/5 kg).

Polyester modified polysiloxane, PSi, used in this invention is a three-block polydimethylsiloxane copolymer having polycaprolactone ends.

The phenolic antioxidant (11076) used in this invention is octadecyl-3- (3,5-di-tert-butyl-4-hydroxyphenyl) propionate.

The silicate nanotube used in this invention is a natural aluminosilicate with tubular morphology (NTS), modified (organophilized) with a quaternary alkylammonium salt (NTSO) or surface treated with N, N'-ethylenebis(stearamide) (NTS-EBS). Nanotubes have diameters less than 100 nm and lengths between 200 nm and 2 microns.

Nanosilica (NSi) used in this invention is a flame-produced amorphous synthetic silica with extremely fine particles in the range of 5-50 nm, a specific surface area of 50-600 m²/g and hydrophobized with a modified silane (methacrylsilane) (NSi-MAS) or with a silazane (hexamethyldisilazane) (NSi-HMDS).

The scratch resistance of the composites was determined according to D455523, the Erichsen 318 indenter and by measuring the friction coefficient with a Hysitron Triboindenter.

The gloss of the composites was determined according to ASTM D523 at 20 °.

The tensile properties of the composites were determined according to ISO 527 at 23 °C and 50% relative humidity, with a test speed of 5 mm/min for tensile strength and a test speed of 1 mm / min for the modulus of elasticity, using 5 specimens for each test, from each sample. Charpy impact resistance, was measured using unnotched specimens according to ISO 179/1eU, using 5 specimens for each sample.

The invention will be explained in detail by the following seven examples:

### Example 1

PMMA, pre-dried 4 hours at 80 °C, and 0.3 % 11076 were mixed 5 minutes at room temperature, in a gravimetric rotating mixer. Then, 20 % of 1:1 mixture of PSi with NSi-MAS, pre-dried 2 hours at 70 °C under vacuum, obtained through mixing 5-10 min, at room temperature was added and the mixing was continued for another 5 minutes. The resulted mixture was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The masterbatch, in granular form, was dried 4 hours at 80 °C, then mixed in a proportion of 10% with PMMA, in a gravimetric rotating mixer, and then was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The composite granules were dried 4 hours at 80 °C, after than specimens for physico-mechanical properties were injected, at an injection temperature of 240 °C and a mould temperature of 80 °C.

The composite is characterized by a scratch resistance enhanced with 50 % and gloss and mechanical strength are similar to those of PMMA.

### Example 2

PMMA, pre-dried 4 hours at 80 °C, and 0.3 % 11076 were mixed 5 minutes at room temperature, in a gravimetric rotating mixer. Then, 30 % of 2:1 mixture of PSi with organophilized silicate nanotubes, NTSO, pre-dried 2 hours at 70 °C under vacuum, obtained through mixing 5-10 min, at room temperature was added and the mixing was continued for another 10 minutes. The resulted mixture was melt homogenized in a co-rotating twin screw extruder, at a main screws speed of 130 rpm and a temperature on the extrusion die of 220 °C. The extruded filaments were taken over a conveyor belt, cooled by air and then granulated in a flow-mounted granulator. The masterbatch, in granular form, was dried 4 hours at 80 °C, then mixed in a proportion of 13.33 % with PMMA, in a gravimetric rotating mixer, and then was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The composite granules were dried 4 hours at 80 °C, after than specimens for physico-mechanical properties were injected, at an injection temperature of 240 °C and a mould temperature of 80 °C.

The final composite exhibits a friction coefficient enhanced with 50 %, a gloss higher with 15 % and an impact strength lower with 15 %, in comparison with PMMA.

### Example 3

The obtaining procedure of masterbatch was similar with that described in Example 2 with the difference that the silicate nanotube treated at surface with EBS, NTS-EBS, prior obtained in dynamical conditions, at 80 °C, during 60 min, was used as reinforcing nanofiller.

The final composite exhibits a friction coefficient enhanced with 50 %, a gloss higher with 20 % and an impact strength lower with 10 %, in comparison with PMMA.

### Example 4

PMMA, pre-dried 4 hours at 80 °C, and 0.3 % 11076 were mixed 5 minutes at room temperature, in a gravimetric rotating mixer. Then, 15 % PSi was added and the mixing was continued for 10 min, then 15 % NSi-HMDS, pre-dried 2 hours at 70 °C under vacuum was added and the mixing was continued for another 10 min. The resulted mixture was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The masterbatch, in granular form, was dried 4 hours at 80 °C, then mixed in proportion of 13.33 % with PMMA, in a gravimetric rotating mixer, and then was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The composite granules were dried 4 hours at 80 °C, after than specimens for physico-mechanical properties were injected, at an injection temperature of 240 °C and a mould temperature of 80 °C.

The final composite is characterized by a scratch resistance enhanced with 120 % and by the lowering of elastic modulus and of impact strength with 14 % and 8 %, respectively, in comparison with PMMA.

### Example 5

PMMA, pre-dried 4 hours at 80 °C, and 0.3 % 11076 were mixed 5 minutes at room temperature, in a gravimetric rotating mixer. Then, 30 % of 1:1 mixture of PSi with NSi-HMDS, pre-dried 2 hours at 70 °C under vacuum, obtained through mixing 5-10 min, at room temperature was added and the mixing was continued for another 10 minutes. The resulted mixture was melt homogenized in a co-rotating twin screw extruder, at a main screws speed of 200 rpm and a temperature on the extrusion die of 220 °C. The extruded filaments were taken over a conveyor belt, cooled by air and then granulated in a flow-mounted granulator. The masterbatch, in granular form, was dried 4 hours at 80 °C, then mixed in proportion of 13.33 % with PMMA, in a gravimetric rotating mixer, and then was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The composite granules were dried 4 hours at 80 °C, after than specimens for physico-mechanical properties were injected, at an injection temperature of 240 °C and a mould temperature of 80 °C.

The final composite is characterized by a scratch resistance enhanced with 230 % and gloss and mechanical strength are similar to those of PMMA.

### Example 6

PMMA, pre-dried 4 hours at 80 °C, with and 0.3 % 11076 were mixed 5 minutes at room temperature, in a gravimetric rotating mixer. Then 20 % PSi was added and the mixing was continued for 10 min, then 20 % NSi-HMDS, pre-dried 2 hours at 70 °C under vacuum was added and the mixing was continued for another 10 min. The resulted mixture was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The masterbatch, in granular form, was dried 4 hours at 80 °C, then mixed in a proportion of 20 % with PMMA, in a gravimetric rotating mixer, and then was melt homogenized in a co-rotating twin screw extruder, at a main screw speed of 130 rpm and a temperature on the extrusion die of 220 °C. The extruded filaments were taken over a conveyor belt, cooled by air and then granulated in a flow-mounted granulator. The composite granules were dried 4 hours at 80 °C, after than specimens for physico-mechanical properties were injected, at an injection temperature of 240 °C and a mould temperature of 80 °C.

The final composite is characterized by a scratch resistance enhanced with 60 % and by the lowering of elastic modulus and of impact resistance with 13 % and 14 %, respectively, in comparison with PMMA.

### Example 7

The masterbatch obtaining procedure was similar to that described in Example 5 with difference that the melt homogenization of masterbatch with PMMA was done directly during the injection processing, at an injection temperature of 220 °C and a mould temperature of 80 °C.

The final composite is characterized by a scratch resistance enhanced with 145 % and gloss and mechanical strength are similar to those of PMMA.

## Claims

1. Composition for masterbatch obtaining based on PMMA, polyester modified polysiloxane and reinforcing nanofiller, **characterized in that** it is composed by the following components, expressed in gravimetric percent: a) 60 % ... 80 % PMMA **characterized by** a melt flow index of 3.0-5.0 g/10 min (230 °C/5 kg), as determined according to ISO 1133, a tensile modulus of 3100-3500 MPa, as determined according to ISO 527 and a gloss higher than 79 UB at 20°, as determined according to ASTM 523, b) 20 % ... 40 % mixture, either in 1:1 ratio of polyester modified polysiloxane and a hydrophobic nanosilica treated at surface with a silazane or a modified silane, or in 2:1 ratio of polyester modified polysiloxane and silicate nanotube, organophylized with a quaternary ammonium salt or treated at surface with a fatty acid amide and c) 0.3 %, with respect to PMMA, sterically hindered phenolic antioxidant.

2. Process for obtaining the masterbatch according to claim 1, **characterised in that,** in a gravimetric rotating mixer, PMMA is first mixed with the phenolic antioxidant at room temperature for 5-10 minutes, then the polyester modified polysiloxane is introduced and continue mixing for another 5-10 minutes, after which the surface-treated nanosilica or the silicate nanotube, organophilized or pre-treated with polysiloxane or with fatty acid amides, in dynamic conditions at 80 °C for 30-60 minutes, is introduced and continue mixing for another 5-10 min, the resulting final mixture is homogenized in melt in a co-rotating twin-screw extruder, at a main screw speed of 130-200 rpm and an extrusion die temperature of 200-220 °C, the extruded filaments were taken over a conveyor belt, cooled by air and granulated in a flow-mounted granulator, the resulted masterbatch in the form of granules is dried for 4 hours at 80 °C.

3. Process for obtaining the masterbatch according to claim 1, **characterised in that,** in a gravimetric rotating mixer, PMMA is first mixed with the phenolic antioxidant at room temperature for 5-10 min, then the mixture obtained previously by mixing 5-10 min of the polyester modified polysiloxane with the surface treated nanosilica or the organophilized silicate nanotube is introduced and mixing is continued for 5-10 minutes, the resulting final mixture is homogenized in melt in a co-rotating twin-screw extruder, at a main screw speed of 130-200 rpm and an extrusion die temperature of 200-220 °C, the extruded filaments were taken over a conveyor belt, cooled by air and then granulated in a flow-mounted granulator, the resulted masterbatch in the form of granules is dried for 4 hours at 80 °C.

4. Process for using of masterbatch obtained according to claim 2 or claim 3 for PMMA modification, **characterised in that,** by mixing it in proportion of 10 % ... 20 %, in a gravimetric rotating mixture, with PMMA and melt homogenization in a co-rotating twin screw extruder, at a main screw speed of 130 rpm and an extrusion die temperature of 220 °C, followed by the injection moulding at an injection temperature of 220-240 °C and a mould temperature of 70-90 °C, composites **characterized by** a scratch resistance enhanced with 50-230 %, a gloss similar or higher with 15-20 %, without decreasing the elastic modulus, the tensile and impact resistances with more than 10-15%, in comparison with PMMA, are obtained.

5. Process for using of masterbatch obtained according to claim 2 or claim 3 for PMMA modification, **characterised in that,** by mixing it in proportion of 10 % ... 20 %, in a gravimetric rotating mixture, with PMMA and melt homogenization directly during injection moulding, at an injection temperature of 220-240 °C and a mould temperature of 70-90 °C, composites **characterized by** a scratch resistance enhanced with 50-230 %, a gloss similar or higher with 15-20 %, without decreasing the elastic modulus, the tensile and impact resistances with more than 10-15%, in comparison with PMMA, are obtained.

## Patentansprüche

1. Zusammensetzung zur Herstellung eines Masterbatches auf der Basis von PMMA, mit Polyester modifiziertem Polysiloxan und verstärkendem Nanofüllstoff, das **dadurch gekennzeichnet ist, dass** es aus den folgenden Komponenten besteht, ausgedrückt in gravimetrischen Prozente : a) 60% ... 80% PMMA, **gekennzeichnet durch** eine Indexschmelze. Durchflussrate von 3,0-5,0 g / 10 min (230 °C / 5 kg), bestimmt nach ISO 1133, Zugmodul von 3100-3500 MPa, bestimmt nach ISO 527 und Glanz größer als 79 UB hei 20°, bestimmt nach ASTM D523, b) 20% ... 40% Gemisch, entweder in Verhältnis von 1: 1 Polyestermodifiziertem Polysiloxan und einer hydrophoben Nanosilica, die an der Oberfläche mit einem Silazan oder einem modifizierten Silan behandelt wurde, oder in Verhältnis von 2: 1 Polysiloxan, modifiziert mit Polyester und Silikat-Nanoröhrehen, organophilisiert mit einem quaternären Ammoniumsalz oder behandelt an der Oberfläche mit einem Fettsäureamid und c) 0,3% im Vergleich zu PMMA, einem sterisch gehinderten phenolischen Antioxidansmittel.

2. Verfahren zur Gewinnung des Masterbatches nach Anspruch 1, **dadurch gekennzeichnet,** in einem gravimetrischenRotarymischer zuerst PMMA mit dem phenolischen Antioxidansmittel bei Raumtemperatur 5-10 Minuten lang mischen, dann das mit Polyester modifizierte Polysiloxan einführen und weitere 5-10 Minuten lang mischen, dann oberflächenbehandelte Nanosilica oder organophilisiertes Silikat-Nanoröhrchen oder zuvor mit Fettsäureamiden oberflächenbehandelt, unter dynamischen Bedingungen, bei 80°C, 30-60 min eingeführt und weitere 5-10 min mischen, wird die resultierende Endmischung in der Schmelze in einer mitrotierende Doppelschneckenextruder, bei einer Hauptschneckendrehzahl von 130-200 U / min und einer Temperatur am Extrusionskopf von 200-220°C homogenisiert werden, die extrudierten Filamente von einem Förderband aufgenommen werden, mit Luft gekühlt werden und dann in einem Granulator der in Strömung mit dem Extruder montiert ist, granuliert, und das resultierende Masterbatch in Form von Granulat wird 4 Stunden bei 80°C getrocknet.

3. Verfahren zur Gewinnung des Masterbatches nach Anspruch I, **dadurch gekennzeichnet,** in einem gravimetrischen Rotarymischer, zuerst PMMA mit dem phenolischen Antioxidansmittel bei Raumtemperatur 5-10 Minuten mischen, dann die Mischung die zuvor durch Mischen von 5 bis 10 Minuten des mit Polyester modifizierten Polysiloxan mit der oberflächenbehandelten Nanosilica oder mit dem erhalten organophilisierten Silikat-Nanoröhrchen einführen, und für weitere 5 bis 10 Minuten mischen, wird die resultierende Endmischung in der Schmelze in einer mitrotierende Doppelschneckenextruder, bei einer Hauptschneckendrehzahl von 130-200 U / min und einer Temperatur am Extrusionskopf von 200-220°C homogenisiert, die extrudierten Filamente von einem Förderband aufgenommen werden, mit Luft gekühlt werden und dann in einem Granulator der in Strömung mit dem Extruder montiert ist, granuliert, und das resultierende Masterbatch in Form von Granulat wird 4 Stunden bei 80°C getrocknet.

4. Verfahren zur Verwendung des nach den Ansprüchen 2 oder 3 erhaltenen Masterbatcheszur Modifizierung von PMMA, **gekennzeichnet dadurch, dass** es in einem Anteil von 10% ... 20% in einem gravimetrischen Rotarymischer mit PMMA gemischt und in der Schmelze homogenisiert wird in einer mitrotierende Doppelschneckenextruder, bei einer Hauptschneckendrehzahl von 130 U / min und einer Temperatur am Extrusionskopf von 220°C, gefolgt von **Spritzgießen, bei einer Einspritztemperatur** von 220-240°C und einer Formtemperatur von 70 - 90°C führt zu Verbundwerkstoffen mit einer um 50 bis 230% verbesserten Kratzfestigkeit, einem um 15 bis 20% ähnlichen oder höheren Glanz, ohne dass der Elastizitätsmodul, die Zugfestigkeit und die Stoßfestigkeit im Vergleich zu PMMA um mehr als 10 bis 1 5% abnehmen.

5. Verfahren zur Verwendung des nach den Ansprüchen 2 oder 3 erhaltenen Masterbatches zur Modifizierung von PMMA, **dadurch gekennzeichnet, dass** es durch Mischen in einem Anteil von 10% ... 20% in einem gravimetrischen Rotarymischer mit PMMA und Homogenisierung in die Schmelze, die direkt während des Spritzgießens bei einer Injektionstemperatur von 220 bis 240°C und einer Formtemperatur von 70 bis 90°C eingeht, führt zur Herstellung von Verbundwerkstoffen mit einer um 50 bis 230% verbesserten Kratzfestigkeit, einem ähnlichen Glanz oder um 15 bis 20% höher, ohne dass der Elastizitätsmodul, die Zugfestigkeit und die Stoßfestigkeit im Vergleich zu PMMA um mehr als 10 bis 15% abnehmen.

## Revendications

1. Composition pour réaliser le mélange maître à base de PMMA, de polysiloxane modifié au polyester et de nanocharge de renfort, **caractérisée en cequ**'elle est constituée des composants suivants, exprimés en pourcentages gravimétriques: a) 60% ... 80% PMMA **caractérisé par** un indice d'écoulement en état fondu de 3,0-5,0 g / 10 min (230°C / 5 kg), déterminé selon ISO 1133, un module d'élasticité à traction de 3100-3500 MPa, déterminé selon ISO 527 et une brillance supérieure à 79 UB à 20°C, déterminé selon ASTM D523, b) 20% ... 40% de mélange, soit dans un rapport 1: 1 de polysiloxane modifié avec du polyester et une nanosilice hydrophobe traitée en surface avec un silazane ou avec un silane modifié, soit dans un rapport de 2: 1 de polysiloxane modifié au polyester et nanotube de silicate, organophilisé avec un sel d'ammonium quaternaire ou traité en surface avec un amide d'acide gras et c) 0,3%, par rapport au PMMA, antioxydant phénolique stériquement encombré.

2. Procédé d'obtention du mélange maître selon la revendication 1, **caractérisé en ce que,** dans un mélangeur rotatif gravimétrique, le PMMA est mélangé avec l'antioxydant phénolique à température ambiante pendant 5 à 10 min, puis le polysiloxane modifié avec du polyester est introduit pendant mélanger encore 5 à 10 min, puis de la nanosilice traitée en surface ou nanotube de silicate organophilisé ou préalablement traité en surface avec des amides d'acide gras, dans des conditions dynamiques, à 80°C, 30-60 min, est introduite en mélangeant pendant encore 5-10 min, le mélange final résultant est homogénéisé dans la masse fondue dans une extrudeuse à double vis, co-rotative, à une vitesse des vis principales de 130-200 tr/min et une température sur la tête d'extrusion de 200-220°C, les fils extrudés sont repris par une bande transporteuse, sont refroidis à l'air puis granulé dans un granulateur monté en flux avec l'extrudeuse et le mélange maître obtenu sous forme de granulés est séché pendant 4 heures à 80°C.

3. Procédé d'obtention du mélangemaître selon la revendication 1, **caractérisé en ce que,** dans un mélangeur rotatif gravimétrique, le PMMA est mélangé avec l'antioxydant phénolique à température ambiante pendant 5 à 10 min, puis le mélange, obtenu antérieurement en mélangeant 5-10 min de polysiloxane modifié avec du polyester et de la nanosilice traitée en surface ou du nanotube de silicate organophilisé, est introduit en mélangeant pendant encore 5-10 min, le mélange final résultant est homogénéisé dans la masse fondue dans une extrudeuse à double vis, co-rotative, à une vitesse des vis principales de 130-200 tr/min et à une température sur la tête d'extrusion de 200-220°C, les fils extrudés sont repris par une bande transporteuse, refroidis à l'air puis granulés dans un granulateur monté en flux avec l'extrudeuse et le mélange maître résultant sous forme de granulés est séché pendant 4 heures à 80°C.

4. Procédé d'utilisation du mélange maître obtenu selon les revendications 2 ou 3 pour la modification du PMMA, **caractérisé en ce que,** en le mélangeant à raison de 10% à 20% dans un mélangeur rotatif gravimétrique avec du PMMA et en l'homogénéisant dans la masse fondue en -une extrudeuse à double vis, co-rotative, à une vitesse des vis principales de 130 tr/min et une température sur la tête d'extrusion de 220°C, suivie d'un moulage par injection, à la température d'injection de 220-240°C et la température du moule de 70 - 90°C, conduit à des composites avec une résistance aux rayures améliorée de 50-230%, une brillance similaire ou supérieure de 15-20%, sans que le module d'élasticité, la résistance à la traction et la résistance aux chocs soit diminués de plus de 10-15% par rapport au PMMA.

5. Procédé d'utilisation du mélange maître obtenu selon les revendications 2 ou 3 pour la modification du PMMA, **caractérisé en cc que,** en le mélangeant à raison de 10% ... 20%, dans un mélangeur rotatif gravimétrique, avec du PMMA et une homogénéisation par fusion, directement pendant le moulage par injection, à la température d'injection de 220-240°C et la température du moule de 70-90°C, conduit à la production de composites avec une résistance aux rayures améliorée de 50-230%, une brillance similaire ou supérieur de 15-20%, sans que le module d'élasticité, la résistance à la traction et la résistance aux chocs soit diminués de plus de 10 à 15% par rapport au PMMA.
